# EUROPEAN PATENT APPLICATION

(11) **EP 2 845 586 A1**
(43) Date of publication of application: **11.03.2015**
(21) Application number: 14184143.7
(22) Date of filing: 09.09.2014
(51) Int. Cl.: A61K 9/20, B01F 7/00, B01F 7/08, B01F 15/02, B01F 15/04, B01F 3/18, B29B 7/38, B29B 7/94, B29C 47/10, G01F 11/02

(54) **Continuous low dosing of an active ingredient**

(30) Priority: 09.09.2013 GB 201316023
(71) Applicant: Research Center Pharmaceutical Engineering GmbH, 8010 Graz (AT); Technische Universität Graz, 8010 Graz (AT)
(72) Inventor: Khinast, Johannes, 8010 Graz (AT); Klein, Thomas, 8652 Kindberg (AT); Faulhammer, Eva, 8010 Graz (AT); Bresciani, Massimo, 8042 Graz (AT)
(74) Representative: Dilg, Haeusler, Schindelmann Patentanwaltsgesellschaft mbH

(57) **Abstract**

A device (100, 200) for providing a continuous flow of a compound having a constant low dose of a physiologically active ingredient (312) is provided. The device comprises a feeding unit (101, 201) configured for supplying a carrier substance (104, 204); a dose feeder (102, 202, 302) configured for discontinuously adding definable portions of the physiologically active ingredient (312) to the carrier substance (104, 204); and a mixer-conveyor unit (103, 203) configured for mixing and conveying the carrier substance (104, 204) and the physiologically active ingredient (312) along a processing path (106) in order to form the continuous flow of the constant low dose compound at an end of the processing path. Furthermore, a method of providing a continuous flow of a compound having a constant low dose of a physiologically active ingredient is provided, wherein the method comprises the steps of supplying a carrier substance; discontinuously adding definable portions of the physiologically active ingredient to the carrier substance; and mixing and conveying the carrier substance and the physiologically active ingredient along a processing path in order to provide the continuous flow of the constant low dose compound at an end of the processing path.

## Description

The invention relates to a device for providing a continuous flow of a compound having a constant low dose of a physiologically active ingredient. The invention further relates to a method of providing a continuous flow of a compound having a constant low dose of a physiologically active ingredient.

In an industrial production of products such as dietary supplements, pharmaceutical products, or food products, a continuous processing of constituents of the product may be required. These constituents may be solid materials, particularly granular materials. For example, a processing of pharmaceutical dosage forms may require a continuous flow of a compound. These compounds which are processed in order to form the pharmaceutical product or the dietary supplement may comprise excipients and active ingredients. Active ingredients are ingredients which may be biologically and/or physiologically active, whereas excipients may be generally a pharmacologically inactive substance formulated with the active ingredient. Typically, the amount of the excipient may exceed the amount of the active ingredient.

However, it may be a challenge to provide a continuous flow of a compound comprising at least one excipient and at least one active ingredient, wherein the amount of the active ingredient is relatively small, particularly if a constant dose of the active ingredient in the compound is required.

It is an object of the invention to provide a device and a method which allow for a continuous flow of a compound having a constant low dose of a physiologically active ingredient.

In order to achieve the object defined above, a device and a method according to the independent claims are provided. Further exemplary embodiments are described in the dependent claims.

According to an exemplary aspect, a device for providing a continuous flow of a compound having a constant low dose of a physiologically active ingredient is provided. The device comprises a feeding unit configured for supplying a carrier substance, a dose feeder configured for discontinuously adding definable portions of the physiologically active ingredient to the carrier substance, and a mixer-conveyor unit configured for mixing and conveying the carrier substance and the physiologically active ingredient along a processing path in order to form the continuous flow of the constant low dose compound at an end of the processing path.

According to a further exemplary aspect, a method of providing a continuous flow of a compound having a constant low dose of a physiologically active ingredient is provided. The method comprises supplying a carrier substance, discontinuously adding definable portions of the physiologically active ingredient to the carrier substance, and mixing and conveying the carrier substance and the physiologically active ingredient along a processing path in order to provide the continuous flow of the constant low dose compound at an end of the processing path.

The term "compound" may particularly denote a mixture of two or more components or constituents. For example, the term compound may denote a mixture of at least one excipient (such as a polymer matrix for a medication) and at least one physiologically active ingredient (such as the active agent of the medication).

The term "continuous flow" may particularly denote a mass flow or volume flow of matter such as a compound with a composition being constant or at least substantially constant over a plurality (for instance at least 10, more particularly at least 100) of sequences of discontinuously adding the definable portions of the physiologically active ingredient. In particular, a continuous flow of matter may be a temporally constant flow of matter (for instance constant over at least one minute or at least 10 minutes).

The term "physiologically active ingredient" may particularly denote a substance which is physiologically and/or biologically active. More particularly, the physiologically active ingredient may be the drug. Further, the physiologically active ingredient may be a substance, for example a chemical which is intended for use in the medical and/or veterinary diagnosis, cure, treatment, and/or prevention of a disease. Also, the physiologically active ingredient may be part of a pharmaceutical drug, a dietary supplement, and/or a food product.

The terms "excipient" and "carrier substance" may particularly denote a physiologically inactive substance which is formulated together with the physiologically active ingredient. An excipient may allow for a convenient and accurate dispensation of a physiologically active ingredient when producing for example a solid dosage form. However, excipients may also allow for various other purposes such as facilitating an absorption of the physiologically active ingredient, a solubility of the physiologically active ingredient, or other properties of the physiologically active ingredient. Further, excipients may be used to bulk up formulations that contain active ingredients, and to allow convenient and accurate dispensation of an active ingredient when producing a dosage form. Also, excipients may be useful in the manufacturing process, to aid in the handling of the active ingredient concerned such as by facilitating powder flowability or non-stick properties, in addition to aiding in stability such as prevention of denaturation over the expected shelf life. The selection of appropriate excipients may also depend upon the route of administration and the dosage form, as well as the active ingredient and other factors.

The term "dose" may particularly denote a quantity (in terms of mass or volume) or an amount of a physiologically active substance, which is fed to a living being, wherein the amount of the substance is sufficient to show an effect. In particular, the dose may correspond to a concentration of the physiologically active substance in an excipient or a carrier substance, particularly a concentration with regard to a volume or a mass. For example, the dose may correspond to a volume percent and/or a weight percent.

The requirements concerning accuracy of relative contributions of a compound are extremely strict particularly in the fields of dietary supplements, pharmaceutical products, and food products, for instance to exclude the risk of overdosing of a medication. An exemplary embodiment of the invention is based on the recognition that the discontinuous, but highly precise addition of pulse-like low doses of a physiologically active ingredient to a flow of a carrier substance allows to obtain a continuous composition after processing by a mixer-conveyor unit. Thus, an extremely small and precisely constant amount of the physiologically active ingredient may be guaranteed in the compound.

In industrial production of products such as dietary supplements, pharmaceutical products, or food products, a continuous work flow is employed. That is, a material which is processed in order to form the products may be fed continuously towards an apparatus forming the products. It may be therefore necessary to provide a continuous flow of the material needed to form the product. The material forming the product may be a compound which comprises at least two components. In particular, an amount of one of the at least two components may be much smaller than the amount of the remaining of the at least two components. For example, the compound may comprise a carrier substance and a physiologically active ingredient, wherein the amount of the physiologically active ingredient is much smaller than the amount of carrier substance. In other words, the compound comprises a low dose or a low concentration of the physiologically active ingredient. Furthermore, it may be necessary that a physiologically active ingredient may be uniformly distributed throughout the compound. In other words, the dose of the physiologically active ingredient may be spatially constant. That is, the amount of physiologically active ingredient may be uniformly distributed and may not vary with regard to any spatial dimensions.

A constant flux of matter, particularly a compound, may be achieved by feeding the matter continuously to a conveying unit configured for conveying the matter. In particular, the carrier substance may be provided by a previous process step, for example, a mixing step, a granulating step, a fluidized bed drying, etc. However, depending on a ratio between the components it may be difficult to feed all components of a compound in a continuous manner. Particularly, if an amount of a component of the compound is much smaller than an amount of the remaining components.

A constant flux of a compound having a constant low dose of a physiologically active ingredient may be particularly achieved by feeding definable portions of the physiologically active ingredient to a carrier substance. In particular, a quantity of the portions may be reproducible. In other word, each portion may comprise the same quantity of the physiologically active ingredient. This may provide the advantage that a determinable quantity of the physiologically active ingredient may be fed or added to the carrier substance. Further, the portion of the physiologically active ingredient may be definable by a volume of the physiologically active ingredient. In other words, the portion of the physiologically active ingredient may be defined by a volume of the physiologically active ingredient. Alternatively, the dose may be defined by a mass of the physiologically active ingredient.

In particular, the definable portions of the physiologically active ingredients may be fed to the carrier substance in discrete intervals. Moreover, definable portions of the physiologically active ingredient may be discontinuously added to the carrier substance. In particular, the term "discontinuously" may denote that the physiologically active ingredient is added in a non-continuous manner, for example in regular or irregular intervals. Furthermore, the definable portions may be fed to the carrier substance by any device which is suitable for providing definable portions, particularly small portions, of a physiologically active substance. For example, the dose feeder may be a dose feeder usually intended for filling pharmaceutical hard capsules. Depending on the particular system which is employed as a dose feeder, the physiologically active ingredient may be added by various techniques. For example, the definable portions may be provided by vibration dosing, volume dosing, etc.

After the portions of the physiologically active ingredient may be fed to the carrier substance, the carrier substance and the physiologically active ingredient may be mixed together and conveyed along a processing path in order to form the continuous flow of the constant low dose compound at an end of the processing path. Due to the mixing of the carrier substance and the physiologically active ingredient, a constant dose or concentration of the physiologically active ingredient may be achieved. In particular, this may be performed in a mixer-conveyor unit configured for mixing and conveying the carrier substance and the physiologically active ingredient. In particular, the mixer-conveyor unit may provide the advantage that a continuous flow of the compound may be provided, wherein the compound may have a constant low dose of the physiologically active ingredient. This may particularly be achieved may simultaneously mixing and conveying the carrier substance and the physiologically active ingredient. For example, the mixer-conveyor unit may be any type of continuous mixer which is suitable to continuously mix the carrier substance and the physiologically active ingredient.

Next, further exemplary embodiments of the device and the method will be explained.

In an embodiment, the physiologically active ingredient is added to the carrier substance in one or more aggregate states, i.e. from any of the group consisting of a solid state, a liquid state, a gaseous state, a suspension state, an emulsion state, a melt state, and any combination of the before mentioned aggregate states (for instance an emulsion in an emulsion) of the physiologically active ingredient.

Additionally or alternatively, the physiologically active ingredient may be added to the carrier substance in one or more formulation selected from the group consisting of a powder, capsules, pills, tablets, emulsions, and any combination of the before mentioned formulations (for instance a powder mixed with an emulsion) of the physiologically active ingredient.

Thus, diverse of the above or other formulations and/or aggregate states of the physiologically active ingredients may be dosed. In particular, an exemplary embodiment of the invention accomplishes to add (in particular repeatedly or continuously in discontinuous doses) a small flow of a physiologically active ingredient (which may be an active pharmaceutical ingredient, API) to any desired continuous carrier substance feeding unit (such as a hot melt extruder (HME), a mixer, a granulator, etc.). This flow of physiologically active ingredient may be, for example, an API solution, an API suspension, an API emulsion, an API melt, an API emulsion in emulsion, etc. Advantageously, an excipient as carrier substance or part thereof for stabilizing and/or for providing one or more other functions can be added as well.

By adapting an interval with which portions of the physiologically active ingredient are discontinuously added, the added overall amount of the physiologically active ingredient may be adapted. This may allow to adapt the dose or concentration of the physiologically active ingredient in the compound. More particularly, if more carrier substance is employed in order to achieve a higher output of the final compound, a rate with which the physiologically active ingredient is added may be increased. This may provide the advantage that an output of the final compound may be increased while the dose of the physiologically active ingredient may be kept constant. Alternatively, the dose of the physiologically active ingredient of the compound may be changed by changing the rate with which the physiologically active ingredient is added.

According to an exemplary embodiment, the dose feeder comprises a reservoir containing the physiologically active ingredient, a dosing unit comprising a cavity configured for accommodating an amount of the physiologically active ingredient corresponding to one portion of the definable portions of the physiologically active ingredient from the reservoir, and a discharge element configured for discharging the accommodated amount of the physiologically active ingredient from the dosing unit.

In particular, the cavity may be adapted in such a manner that a volume of the cavity, for example an inner volume of the cavity, may define the amount of the accommodated physiologically active substance. Further, the amount of physiologically active ingredient may be collected and accommodated by immerging or dipping the cavity of the dosing unit into the reservoir of the physiologically active ingredient. Also, the reservoir may be configured in such a manner that it is ensured that the cavity is completely filled with the physiologically active ingredient when the cavity is dipped into the reservoir. For example, the reservoir may be configured so that at least a minimal filling level of the physiologically active ingredient is maintained in the reservoir at all times. This may provide the advantage that it may be ensured that the cavity of the dosing unit always collects the amount of the physiologically active ingredient corresponding to one portion. Hence, it may be ensured that the dosing unit does not collect more or less than the amount corresponding to one portion. Furthermore, the discharge element of the dose feeder may particularly be configured for discharging the accommodated amount of the physiologically active ingredient from the dosing unit in such a manner that no residue of the physiologically active ingredient may remain in the dosing unit. In particular, the dose feeder may be a dose feeder usually intended for filling pharmaceutical hard capsules. Moreover, the dose feeder may comprise more than one dosing unit, wherein each dosing unit may comprise a cavity configured for collecting an amount of the physiologically active ingredient corresponding to one portion of the definable portions of the physiologically active ingredient from the reservoir and a discharge element configured for discharging the accommodated amount of the physiologically active ingredient from the cavity of the dosing unit.

According to an exemplary embodiment, the dose feeder is configured for adjusting the dose of the physiologically active ingredient by adapting a time interval between two subsequent ones of the portions of the physiologically active ingredient being discontinuously added to the carrier substance.

In particular, adjusting the dose of the physiologically active ingredient by adapting an interval with which the amount of the physiologically active ingredient is discontinuously added to the carrier substance may allow for a simple and efficient way of adjusting the dose of the physiologically active ingredient. The interval may be in the range between 0.1 s to 100 s, more particularly between 1s and 10s. For example, if the time interval with which the amount of the physiologically active ingredient is discontinuously added to the carrier substance is decreased or shorted, in other words the rate with which the amount of the physiologically active ingredient is added is increased, the dose of the physiologically active ingredient is increased. If the time interval with which the amount of the physiologically active ingredient is discontinuously added to the carrier substance is increased, in other words the rate is decreased, the dose of the physiologically active ingredient is decreased. Thus, the dose of the physiologically active ingredient may be adjusted without the need to adjust the cavity of the dosing unit corresponding one portion.

According to an exemplary embodiment, the dose feeder is configured for adding the physiologically active ingredient in periodic time intervals to the carrier substance.

In particular, the physiologically active ingredient may be added depending on a specific operation step of the device, particularly of the mixer-conveyer unit, particular a specific conveying step. For example, the physiologically active ingredient may be added on every conveying step or on every other conveying step or on every third conveying step of the mixer-conveyer unit. Alternatively, the physiologically active ingredient may be added independent from a specific operation step. Adding the physiologically active ingredient in periodic intervals may provide the advantage that a uniform distribution of the physiologically active ingredient may be improved.

According to an exemplary embodiment, the dose feeder is configured for adjusting the dose of the physiologically active ingredient by adapting the accommodated amount of the physiologically active ingredient.

In particular, the dose of the physiologically active ingredient may be directly proportional to the accommodated amount of the physiologically active ingredient. More particularly, if the interval with which the physiologically active ingredient is added to the carrier substance is kept constant, i.e. is not varied, a dose of the physiologically active ingredient may be increased by increasing the accommodated amount of the physiologically active ingredient. The dose of the physiologically active ingredient may be decreased in the same manner, namely by decreasing the accommodated amount of the physiologically active ingredient, while keeping the interval with which the physiologically active ingredient is added constant. Thus, adjusting the dose of the physiologically active ingredient by adapting the accommodated amount may provide a simple and efficient way of adjusting the dose of the physiologically active ingredient.

According to an exemplary embodiment, a volume of the cavity of the dosing unit of the dose feeder, particularly a diameter of the cavity and/or a height of the cavity, defines the accommodated amount of the physiologically active ingredient.

In particular, an accommodated volume of the physiologically active ingredient may be proportional to an accommodated amount of the physiologically active ingredient. For example, a weight of an amount of matter is given by a volume of the matter times a density of the matter. Further, collecting the physiologically active ingredient in a volume of a cavity of the dosing unit may allow for a reliable and fast way of collecting the amount of physiologically active ingredient. In particular, the cavity of the dosing unit may comprise a cylindrical shape. Thus, the volume of the cavity of the dosing unit may be given by a diameter of the cavity times a height of the cavity. In case the physiologically active ingredient is provided in a liquid or granular form, particularly powder form, determining the amount of the physiologically active ingredient by determining the volume of the physiologically active ingredient may be much faster than weighing the amount of the physiologically active ingredient. In particular, the amount of the physiologically active ingredient may be determined by completely filling the cavity of the dosing unit with the physiologically active ingredient.

According to an exemplary embodiment, the dosing unit has a mechanism for adjusting the volume of the cavity.

There may be in principle two ways of adjusting a volume of a cavity in case the cavity may have a cylindrical or cubic shape. The volume of the cavity may then be proportional to a height and an area of a base of the cavity. By providing a mechanism which may allow for an adjustment of the height of the cavity or the base area of the cavity, a simple and reliable way for adjusting a volume of the may be provided. For example, the mechanism may be configured for decreasing and/or increasing a diameter of the cavity. Alternatively, different cavities having different diameters may be provided. Thus, the diameter may be adjusted by changing, particularly exchanging, a cavity of the dosing unit. For example, the volume may be increased by providing a cavity having a larger diameter and the volume may be decreased by providing a cavity having a smaller diameter. In particular, the cavity may have a diameter between 0.5 mm and 10 mm, more particularly between 1 mm and 7 mm. However, cavities having a diameter smaller than 1 mm or larger than 10 mm are also possible. Adapting the height of the cavity may be achieved, for example by shifting a position of a base plate in height. Moreover, the dosing unit may comprise both a mechanism for adjusting the height of the cavity and a mechanism for adjusting the base area of the cavity. This may offer a more variable dosing unit.

According to an exemplary embodiment, the discharge element forms a part of or is located within the cavity of the dosing unit.

In particular, by arranging the discharge element configured for discharging the accommodated amount of the physiologically active ingredient from the dosing unit in such a way that the discharge element forms a part of the cavity, a mechanism of the discharge element may also be used for adapting the height of the cavity and thereby a volume of the cavity. For example, the discharge element may comprise a piston configured for pressing an amount of the physiologically active ingredient out of the cavity of the dosing unit. Thus, the same mechanism which may be utilized for discharging the accommodated amount of the physiologically active ingredient may be advantageously utilized to adapt a volume of the cavity.

According to an exemplary embodiment, the device comprises a mechanism for adjusting the volume of the cavity of the dosing unit by adjusting a position of the discharge element.

In case the discharge element forms a part of the cavity of the dosing unit, for example a bottom, a volume of the cavity may be adjusted by adjusting the position of the discharge element. For example, if the position of the discharge element may be changed in such a manner that a height of the cavity of the dosing unit may be increased during a filling of the cavity, a accommodated amount of the physiologically active ingredient may be increased since the volume of the cavity may be increased.

According to an exemplary embodiment, the dose feeder is configured to adjust the constant dose in the range between 0.01 Mass% and 15 Mass%, particularly between 0.05 Mass% and 7.5 Mass%, in relation to the carrier substance.

In particular, the dose feeder may adapt the constant dose by adjusting an interval with which the physiologically active ingredient is added and/or by adjusting the accommodated amount of the physiologically active ingredient. A constant dose in the range between 0.01 Mass% and 15 Mass% may particularly be achieved by discontinuously adding definable portions to a constant carrier substance stream. For example, the constant dose may correspond to an amount of 0.1 mg of physiologically active ingredient. However, the weight of a dose depends on the density of the physiologically active ingredient so that the weight of an amount of physiologically active ingredient may vary depending on the density of the physiologically active ingredient.

According to an exemplary embodiment, the feeding unit is a gravimetric powder feeder.

A gravimetric powder feeder may particularly allow for a simple supplying of the carrier substance. The gravimetric powder feeder may comprise a funnel or a hopper which supplies the carrier substance to the mixer-conveyer unit. Further, the gravimetric powder feeder may supply the carrier substance with the aid of gravity. This may allow particularly for an energy efficient supplying of the carrier substance. Also, a gravimetric powder feeder may provide the advantage that a carrier substance may be provide in a continuous manner. In particular, the feeding unit may receive the carrier substance from a previous process step, for example, a mixing step, a granulating step, a fluidized bed drying, etc.

According to an exemplary embodiment, the mixer-conveyor unit is an extruder, particularly a screw extruder.

The extruder may particularly be a screw extruder, more particularly a double screw extruder. In particular, the advantage of an extruder may be that an extruder allows for a simultaneous mixing and conveying of the compound. Due to a motion of a screw, for example in a screw extruder, the carrier substance and the added definable portions of the physiologically active ingredient may be mixed or blended together while at the same time the mixture or compound of the carrier substance and the physiologically active ingredient may be transported along a processing path of the extruder. Furthermore, the mixer-conveyer unit may comprise a sufficient length, which may be long enough to ensure a uniform distribution of the physiologically active ingredient in the carrier substance. For example, in case that the mixer-conveyor unit may be a screw extruder, the screw extruder may comprise at least two thread turns, preferably more than five thread turns. Thus, a continuous flow of the compound having a constant low dose of the physiologically active ingredient may be provided. Alternatively, any other compounding equipment configured for mixing and conveying, particularly continuous and/or simultaneous mixing and conveying, of a compound may be utilized as a mixer-conveyer unit.

According to an exemplary embodiment, a housing of the extruder has a first inlet at which the feeding unit is arranged for supplying the carrier substance and has a second inlet downstream of the first inlet at which the dose feeder is arranged for discontinuously adding the definable portions of the physiologically active ingredient.

According to an exemplary embodiment, the device further comprises a further dose feeder configured for discontinuously adding definable portions of a further physiologically active ingredient to the carrier substance.

In particular, the further dose feeder may allow for a continuous flow of a compound having a constant low dose of a further physiologically active ingredient. Thus, the compound may comprise a constant low dose of a physiologically active ingredient and a constant low dose of a further physiologically active ingredient. Moreover, the physiologically active ingredient may differ from the further physiologically active ingredient. Thus, the compound may comprise a constant low dose of at least two different physiologically active ingredients. However, the further dose feeder may alternatively comprise the same physiologically active ingredient as the further physiologically active ingredient. Hence, the further dose feeder may act as, for example, a backup system ensuring a smooth operation of the described device. In this case, the further dose feeder may overtake the operation of the dose feeder if the dose feeder may run out of the physiologically active ingredient or may have technical problems. It should be also noted, that more physiologically active ingredients than the physiologically active ingredient and the further physiologically active ingredient may be added to the carrier substance. In other words, the compound may comprise a constant low dose of several different physiologically active ingredients. This may for example be achieved by providing a dose feeder for each physiologically active ingredient.

According to an exemplary embodiment, the further dose feeder comprises a further reservoir containing the further physiologically active ingredient; a further dosing unit comprising a cavity configured for accommodating an amount of the further physiologically active ingredient corresponding to one portion of the definable portions of the further physiologically active ingredient from the reservoir; and a further discharge element configured for discharging the accommodated amount of the further physiologically active ingredient from the further dosing unit.

In particular, the cavity of the further dosing unit may be adapted in a same manner as the cavity of the dosing unit. That is a volume of the cavity of the further dosing unit, for example an inner volume of the cavity, may define the amount of the collected and accommodated further physiologically active substance. Further, the amount of the further physiologically active ingredient may be collected and accommodated by dipping the cavity of the further dosing unit into the reservoir of the further physiologically active ingredient. Also, the further reservoir may be configured in such a manner that it is ensured that the cavity is completely filled with the physiologically active ingredient when the cavity is dipped into the further reservoir. For example, the reservoir may be configured so that at least a minimal filling level of the further physiologically active ingredient is contained in the further reservoir at all times. This may provide the advantage that it may be ensured that the cavity of the further dosing unit always collects the amount of the further physiologically active ingredient corresponding to one portion. Hence, it may be ensured that the further dosing unit does not collect more or less than the amount corresponding to one portion. Furthermore, the further discharge element of the further dose feeder may particularly be configured for discharging the accommodated amount of the further physiologically active ingredient from the further dosing unit in such a manner that no residue of the further physiologically active ingredient may remain in the dosing unit.

According to an exemplary embodiment, a time interval with which the portion of the physiologically active ingredient is added to the carrier substance and a further time interval with which the portion of the further physiologically active ingredient is added to the carrier substance are equal. According to a further exemplary embodiment, a time interval with which the amount of the physiologically active ingredient is added to the carrier substance and a further time interval with which the amount of the further physiologically active ingredient is added to the carrier substance are different.

In particular, the physiologically active ingredient and the further physiologically active ingredient may be added simultaneously. Alternatively, the physiologically active ingredient and the further physiologically active ingredient may be added with different intervals. Thus, a concentration ratio between the physiologically active ingredient and the further physiologically active ingredient may be adjustable. For example, by adding the further physiologically active ingredient every other time the physiologically active ingredient is added, a lower concentration of the further physiologically active ingredient compared to the physiologically active ingredient may be achieve. However, as explained above, the dose or concentration of the physiologically active ingredient and the further physiologically active ingredient may also be adapted by adjusting the added portions of the physiologically active ingredient and the further physiologically active ingredient.

According to an exemplary embodiment, the dose feeder is arranged downstream of the feeding unit along the processing path.

The dose feeder may be arranged along the processing path downstream of the feeding unit feeding the carrier substance. This may provide the advantage that the physiologically active ingredient may be added directly to the carrier substance since the carrier substance has already been introduced into the processing path. Further, the dose feeder may be arranged along the processing path in such a manner that the carrier substance may be already in the mixer-conveyor unit at the time the dose feeder may add the physiologically active ingredient. This may provide the advantage that the carrier substance may already be pre-mixed so that the mixing of the carrier substance and the physiologically active ingredient may be improved.

According to an exemplary embodiment, a supply direction along which the feeding unit supplies the carrier substance and/or a supply direction along which the dose feeder supplies the physiologically active ingredient is perpendicular to the processing path and/or is parallel to the force of gravity.

In case the processing path is arranged horizontally, the feeding unit and/or the dose feeder may supply the carrier substance and/or the physiologically active ingredient, respectively, from above in a vertical direction so that gravity may be advantageously utilized for the supplying of the carrier substance and/or the physiologically active ingredient.

Next, further exemplary embodiments of the method will be explained. However, these embodiments also apply to the device.

According to an exemplary embodiment, discontinuously adding the definable portions of the physiologically active ingredient to the carrier substance comprises collecting an amount of the physiologically active ingredient corresponding to one portion of the definable portions of the physiologically active ingredient from a reservoir and discharging the collected amount of the physiologically active ingredient to the carrier substance.

In particular, the physiologically active ingredient may be collected by filling a cavity, whose inner volume may correspond to the amount of the physiologically active ingredient to be collected, with the physiologically active ingredient from the reservoir of the physiologically active ingredient. For example, the cavity may be dipped into the physiologically active ingredient and thereby filled with the physiologically active ingredient. The collected amount of the physiologically active ingredient may then be discharged from the cavity by a discharge element such as a plunger.

According to an exemplary embodiment, the method further comprises adjusting the collected amount of the physiologically active ingredient in accordance with a predefined target value.

In particular, the dose of the physiologically active ingredient may be directly proportional to the collected amount of the physiologically active ingredient. More particularly, a dose of the physiologically active ingredient may be increased by increasing the collected amount of the physiologically active ingredient. The dose of the physiologically active ingredient may be decreased by decreasing the collected amount of the physiologically active ingredient. Thus, adapting the collected amount may provide a simple and efficient way of adjusting the dose of the physiologically active ingredient.

According to an exemplary embodiment, the method further comprises adjusting an interval, particularly a temporal interval or a spatial interval, with which the portion of the physiologically active ingredient is discontinuously added to the carrier substance in accordance with a predefined target value.

In particular, adapting an interval with which the amount of the physiologically active ingredient is discontinuously added to the carrier substance may allow for a simple and efficient way of adjusting the dose of the physiologically active ingredient. For example, if the time interval with which the amount of the physiologically active ingredient is discontinuously added to a carrier substance is shorted, i.e. the rate with which the amount of the physiologically active ingredient is added is increased, the dose of the physiologically active ingredient is increased. If the interval which the amount of the physiologically active ingredient is discontinuously added to the carrier substance is enlarged, the dose of the physiologically active ingredient is decreased. Thus, the dose of the physiologically active ingredient may be adjusted without the need to adjust the collected amount of the physiologically active ingredient. More particularly, there may be not need to adapted a mechanical element such as cavity in which the amount of the physiologically active ingredient may be collected.

According to an exemplary embodiment, the method further comprises adding the physiologically active ingredient in periodic intervals to the carrier substance.

According to an exemplary embodiment, the method further comprises discontinuously adding definable portions of a further physiologically active ingredient to the carrier substance.

In particular, by adding definable potions of a further physiologically active ingredient to the carrier substance a continuous flow of a compound having a constant low dose of a further physiologically active ingredient may be provided. Thus, the compound may comprise a constant low dose of a physiologically active ingredient and a constant low dose of a further physiologically active ingredient. Moreover, the physiologically active ingredient may differ from the further physiologically active ingredient. Thus, the compound may comprise a constant low dose of at least two different physiologically active ingredients. However, the further dose feeder may alternatively comprise the same physiologically active ingredient as the further physiologically active ingredient. Hence, the further dose feeder may act as, for example, a backup system ensuring a smooth operation of the described device. In this case, the further dose feeder may overtake the operation of the dose feeder if the dose feeder may run out of the physiologically active ingredient or may have technical problems. It should also be noted, that more physiologically active ingredients than the physiologically active ingredient and the further physiologically active ingredient may be added to the carrier substance. In other words, the compound may comprise a constant low dose of several different physiologically active ingredients.

According to an exemplary embodiment, discontinuously adding the definable portions of the further physiologically active ingredient to the carrier substance comprises collecting an amount of the further physiologically active ingredient corresponding to one portion of the definable portions of the further physiologically active ingredient from a further reservoir; and discharging the collected amount of the further physiologically active ingredient to the carrier substance.

In particular, the further physiologically active ingredient may be collected by filling a further cavity whose inner volume may correspond to the amount of the further physiologically active ingredient to be collected with the further physiologically active ingredient from the further reservoir of the physiologically active ingredient. For example, the cavity may be immerged into the further physiologically active ingredient and thereby filled with the further physiologically active ingredient. The collected amount of the further physiologically active ingredient may then be discharged from the cavity by a further discharge element such as a plunger.

According to an exemplary embodiment, the carrier substance and/or the physiologically active ingredient and/or the further physiologically active ingredient are in powder form.

According to an exemplary embodiment a program element is provided, which, when being executed by a processor, is adapted to control and/or carry out a method according to an exemplary aspect of the invention. Further the program element may be adapted, when being executed by a processor, to control discontinuously adding definable portions of a physiologically active ingredient to a carrier substance. Moreover, the program element may be adapted, when being executed by a processor, to control a mixing and conveying of the carrier substance and the physiologically active ingredient along a processing path in order to provide a continuous flow of a constant low dose compound.

The program element may be implemented as a computer readable command code in any suitable programming language such as JAVA, C++ etc. The program element may be stored on a computer readable medium such as CD-ROM, DVD, Blue-ray Disk, removable drive, volatile and non-volatile memory etc. Further, the program element may be provided in a network, for example the Internet, and may be downloaded from a user on demand.

According to an exemplary embodiment, a computer-readable medium, in which a computer program is stored which, when being executed by a processor, is adapted to control and/or carry out a method according to an exemplary aspect of the invention.

The aspects defined above and further aspects of the invention are apparent from the examples of embodiment to be described hereinafter and are explained with reference to these examples of embodiment.

The invention will be described in more detail hereinafter with reference to examples of embodiment but to which the invention is not limited.
Fig. 1 illustrates a device for providing a continuous flow of a compound having a constant low dose of a physiologically active ingredient according to an exemplary embodiment.
Fig. 2 illustrates a device for providing a continuous flow of a compound having a constant low dose of a physiologically active ingredient according to another exemplary embodiment.
Figs. 3a to 3c illustrate a dose feeder 302 according to an exemplary embodiment adding definable portions of a physiologically active ingredient 312 to a carrier substance.
Fig. 4 shows a weight over time diagram showing a result of a dosing procedure performed by a device according to an exemplary embodiment.
Fig. 5 shows a diagram illustrating a process stability of a dosing procedure according to an exemplary embodiment.
Fig. 6 shows a diagram illustrating the cumulative amounts of the physiologically active ingredient of the dosing procedure shown in Fig. 5.

The illustration in the drawing is schematically. In different drawings, similar or identical elements are provided with the same reference signs.

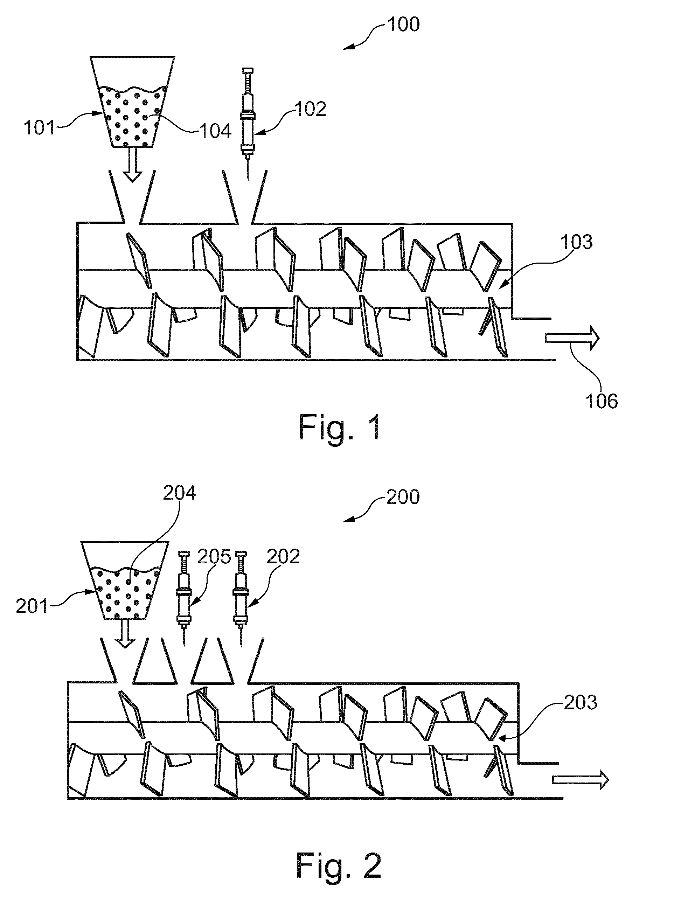

In the following, referring to Fig. 1, a device 100 for providing a continuous flow of a compound having a constant low dose of a physiologically active ingredient according to an exemplary embodiment will be explained.

The device 100 comprises a feeding unit 101, a dose feeder 102, and a mixer-conveyor unit 103. The feeding unit 101 is configured for supplying a carrier substance 104 to the device 100. For example, the carrier substance 104 may be in powder form and the feeding unit 101 may be a gravimetric powder feeder.

The carrier substance 104 is supplied to the device 100 in a continuous manner. The flux with which the carrier substance 104 is supplied may, for example, be 100 g/h. The physiologically active ingredient is discontinuously added to the carrier substance 104 in definable portions by the dose feeder 102. A portion may correspond to an amount of 4.5 mg of the physiologically active ingredient. Both the carrier substance 104 and the portions of the physiologically active ingredient are mixed together and simultaneously conveyed by the mixer-conveyor unit 103. For example, the mixer-conveyor unit 103 may be a screw extruder. However, any other equipment configured for mixing and conveying, particularly continuous and/or simultaneous mixing and conveying, of a compound may be utilized as a mixer-conveyer unit. Moreover, the mixer-conveyor unit 103 mixes and conveys the carrier substance 104 and the added portions of the physiologically active ingredient along a processing path which is indicated with arrow 106 in order to form the continuous flow of the constant low dose compound at an end of the processing path.

The dose feeder 102 is configured for adapting an interval with which the portion of the physiologically active ingredient is discontinuously added to the carrier substance 104. Thus, a final dose of the physiologically active ingredient at the end of the processing path may be adjusted by changing the interval with which the portion of the physiologically active ingredient is added. For example, the physiologically active ingredient may be added in periodic intervals having a length of one second. However, the interval may be longer or shorter depending of a desired dose of the physiologically active ingredient.

In the following, referring to Fig. 2, a device 200 for providing a continuous flow of a compound having a constant low dose of a physiologically active ingredient according to an exemplary embodiment will be explained.

The device 200 comprises a feeding unit 201, a dose feeder 202, a further dose feeder 205 and a mixer-conveyor unit 203. The feeding unit 201 is configured for supplying a carrier substance 204 to the device 200. For example, the carrier substance 204 may be in powder form and the feeding unit 201 may be a gravimetric powder feeder.

The carrier substance 204 is supplied to the device 200 in a continuous manner. The physiologically active ingredient is then discontinuously added to the carrier substance 204 in definable portions by the dose feeder 202. The further dose feeder 205 adds a further physiologically active substance to carrier substance. In particular, the physiologically active ingredient and the further physiologically ingredient may be different from one another. Hence, the device 200 allows in such a case that a continuous flow of a compound having a constant low dose of a physiologically active ingredient and a constant low dose of a further physiologically active ingredient is provided. However, the physiologically active ingredient and the further physiologically active ingredient may be identical and the further dose feeder may as well be used as a backup system allowing for a smooth operation of the device 200.

The carrier substance 204, the portions of the physiologically active ingredient and the portions of the further physiologically active ingredient are mixed together and simultaneously conveyed by the mixer-conveyor unit 203. For example, the mixer-conveyor unit 203 may be a screw extruder. Moreover, the mixer-conveyor unit 203 mixes and conveys the carrier substance 204 and the added portions of the physiologically active ingredient and the further physiologically active ingredient along a processing path in order to form the continuous flow of the constant low dose compound at an end of the processing path.

The dose feeder 202 and the further dose feeder 205 are each configured for adapting an interval with which the portion of the physiologically active ingredient and the further physiologically active ingredient, respectively, are discontinuously added to the carrier substance 204. Thus, a final dose of the physiologically active ingredient and a final dose of the further physiologically active ingredient at the end of the processing path may be adjusted by changing the respective interval with which the portion of the physiologically active ingredient and the portion of the further physiologically active ingredient are added. In particular, the physiologically active ingredient and the further physiologically active ingredient may be added simultaneously. However, the physiologically active ingredient and the further physiologically active ingredient may as well be added with different intervals.

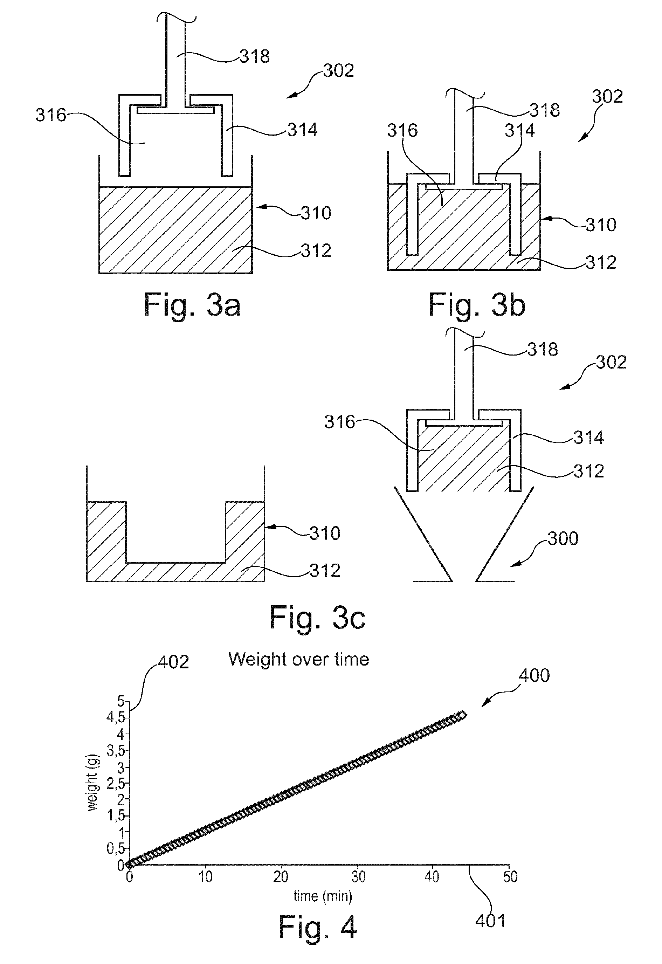

In the following, referring to Figs. 3a to 3c, a dose feeder 302 according to an exemplary embodiment adding definable portions of a physiologically active ingredient to a carrier substance will be explained.

Fig. 3a illustrates the dose feeder 302 which comprises a reservoir 310 of the physiologically active ingredient 312, a dosing unit 314 comprising a cavity 316 configured for collecting an amount of the physiologically active ingredient corresponding to one portion of the definable portions of the physiologically active ingredient 312 from the reservoir 310, and a discharge element 318 configured for discharging the collected amount of the physiologically active ingredient 316 from the dosing unit 314. The cavity 316 is adapted in such a manner that a volume of the cavity 316 defines the amount of the collected physiologically active substance 312.

The amount of physiologically active ingredient 312 is collected by dipping the cavity 316 of the dosing unit 314 into the reservoir 310 of the physiologically active ingredient 312 as it is illustrated in Fig. 3b. The volume of the cavity 316 of the dosing unit 314 is proportional to a height of the cavity 316. For example, if the position of the discharge element 318 is changed in height, the volume of the cavity 316 of the dosing unit 314 may be changed which allows to adapted the volume of the cavity 316 and thereby the collected amount of the physiologically active ingredient.

After the dosing unit 314 collected the amount of the physiologically active ingredient 312, the discharge element 318 of the dose feeder 302 discharges the collected amount of the physiologically active ingredient 312 from the dosing unit 302 into the device 300 for providing the continuous flow of the compound having the constant low dose of the physiologically active ingredient 312. In order to reduce a variation of the amount of the physiologically active ingredient, the dosing unit may be clean before and after being dipped into the reservoir.

In the following, referring to Fig. 4, a weight over time diagram 400 showing a result of a dosing process performed by a device according to an exemplary embodiment will be explained.

A device for providing a continuous flow of a compound having a constant low dose of a physiologically active ingredient, for example the device 100 shown in Fig. 1, is adjusted in such a manner that the dose feeder collects a portion corresponding to 4.5 mg of the physiologically active ingredient. The interval with which the physiologically active ingredient is added to the carrier substance is set to an interval corresponding to 1500 portion per hour. In order to measure the collected amount of the physiologically active ingredient, each collected portion is discharged from the cavity into a respective hard capsule, instead of the carrier substance. The process is run for 45 minutes and the hard capsules carrying the discharged portions are weighted in order to monitor the stability of the process. The mean weight was determined to be 4.4 ± 1.1 mg. In Fig. 4, the time is shown on the abscissa 401 and the weight of the weighted portions is shown on the ordinate 402. As can be seen from Fig. 4, the weight of the collected portions linearly increases with time. This indicates that the described method of discontinuously adding definable portions may allow for providing a compound having a constant low dose of a physiologically active ingredient.

In particular, depending on the definable portions and the interval with which the portions are added, a wide range of concentrations may be achievable. The following table shows how different doses of a physiologically active ingredient in a continuous flow of a compound having a constant low dose of the physiologically active ingredient according to an exemplary embodiment may be achieved. The carrier substance in this example is fed to the device with a constant flow of 1kg/h. As can be seen from the following table, the dose of the physiologically active ingredient may be adapted by adapting an interval with which the portions are added, that is the number of portions added per hour. The dose of the physiologically active ingredient may also be adapted changing the amount of a portion.

| Portions per hour | 100 | 500 | 1000 | 2000 | 3000 | 100 | 500 | 1000 | 2000 | 3000 |
|---|---|---|---|---|---|---|---|---|---|---|
| Portion (mg) | 5 | 5 | 5 | 5 | 5 | 10 | 10 | 10 | 10 | 10 |
| Dose (%) | 0,05 | 0,25 | 0,5 | 1 | 1,5 | 0,1 | 0,5 | 1 | 2 | 3 |

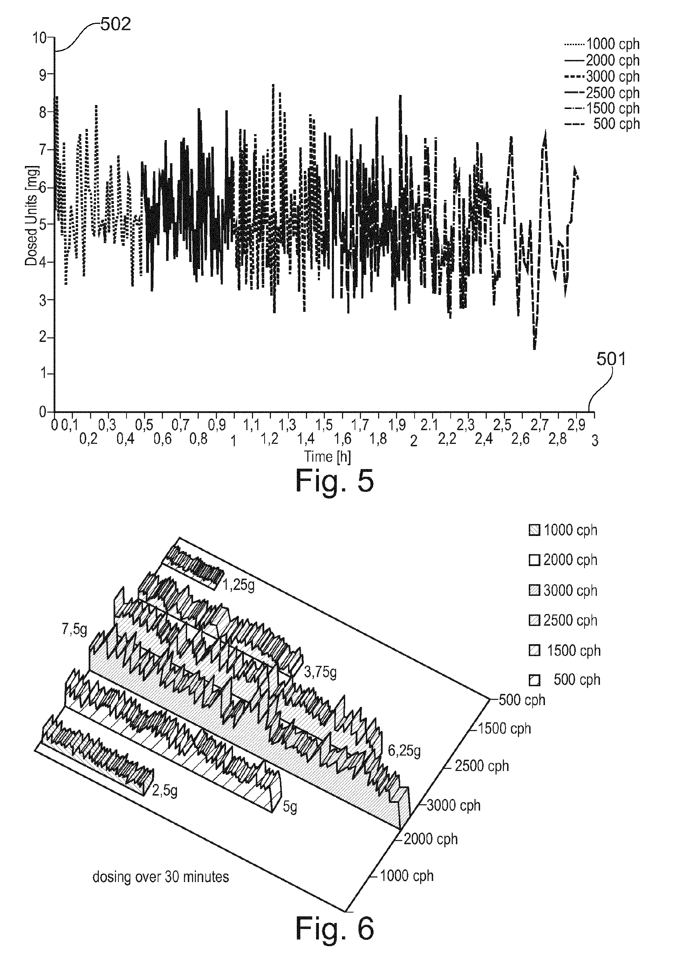

In the following, referring to Fig. 5, a diagram illustrating a process stability of a dosing procedure according to an exemplary embodiment will be explained.

A device for providing a continuous flow of a compound having a constant low dose of a physiologically active ingredient, for example the device 100 shown in Fig. 1, is adjusted in such a manner that the dose feeder collects a portion corresponding to 5 mg of the physiologically active ingredient. The dosing unit is adjusted to a cavity diameter of 1.9 mm and a cavity height of 5 mm. A layer of the physiologically active ingredient in the reservoir has a height of 12.5 mm. The process is performed at six different speeds, 1000, 2000, 3000, 2500, 1500 and 500 units per hour, wherein each speed is maintained for 30 minutes, resulting in an overall process duration of 3 hours. In order to measure the collected amount of the physiologically active ingredient, each collected portion is discharged from the cavity of the dose feeder into a respective hard capsule, instead of the carrier substance. For each production speed, 10 % of the filled capsules are gathered and weighted in order to monitor the stability of the process. The mean weight was determined to be 5.1 mg. In Fig. 5, time is shown on the abscissa 501 and the weight of the weighted portions is shown on the ordinate 502. Note that the weight deviation which can be seen in Fig. 5 results from the weight deviation of the hard capsules and not from a weight deviation of the collected amount of the physiologically active ingredient.

Fig. 6 shows a diagram illustrating the cumulative amounts of the physiologically active ingredient of the dosing procedure shown in Fig. 5. As can be seen, the cumulative amount of the physiologically active ingredient is proportional to the production speed.

It should be noted that the term "comprising" does not exclude other elements or steps and the "a" or "an" does not exclude a plurality. Also elements described in association with different embodiments may be combined.

It should also be noted that reference signs in the claims shall not be construed as limiting the scope of the claims.

## Claims

1. A device (100, 200) for providing a continuous flow of a compound having a constant low dose of a physiologically active ingredient (312), the device comprising
a feeding unit (101, 201) configured for supplying a carrier substance (104, 204);
a dose feeder (102, 202, 302) configured for discontinuously adding definable portions of the physiologically active ingredient (312) to the carrier substance (104, 204), wherein the dose feeder comprises a dosing unit comprising a cavity, wherein a volume of the cavity (316) of the dosing unit defines the accommodated amount of the physiologically active ingredient (312) corresponding to one portion of the definable portions of the physiologically active ingredient (312); and
a mixer-conveyor unit (103, 203) configured for mixing and conveying the carrier substance (104, 204) and the physiologically active ingredient (312) along a processing path (106) in order to form the continuous flow of the constant low dose compound at an end of the processing path.

2. The device (100, 200) according to claim 1, wherein the dose feeder (102, 202, 302) comprises:
a reservoir (310) containing the physiologically active ingredient (312); and
a discharge element (318) configured for discharging the accommodated amount of the physiologically active ingredient (312) from the dosing unit (314).

3. The device (100, 200) according to claim 1 or 2, comprising at least one of the following features:
wherein the dose feeder (102, 202, 302) is configured for adjusting the dose of the physiologically active ingredient (312) by adapting a time interval between two subsequent ones of the portions of the physiologically active ingredient (312) being discontinuously added to the carrier substance (104, 204);
wherein the dose feeder (102, 202, 302) is configured for adding the physiologically active ingredient (312) in periodic time intervals to the carrier substance (104, 204);
wherein the dose feeder (102, 202, 302) is configured for adjusting the dose of the physiologically active ingredient (312) by adapting the accommodated amount of physiologically active ingredient (312);
wherein a diameter of the cavity and/or a height of the cavity, defines the accommodated amount of the physiologically active ingredient (312);
wherein the dosing unit (314) has a mechanism for adjusting the volume of the cavity (316);
wherein the discharge element (318) forms a part of or is located within the cavity (316) of the dosing unit (314);
comprising a mechanism for adjusting the volume of the cavity (316) of the dosing unit (314) by adjusting a position of the discharge element (318);
wherein the dose feeder (102, 202, 302) is configured to adjust the constant dose in the range between 0.01 mass% and 15 mass%, particularly between 0.05 mass% and 7.5 mass%, in relation to the carrier substance (104, 204);
wherein the dose feeder (102, 202, 302) is arranged downstream of the feeding unit (101, 201) along the processing path;
wherein a supply direction along which the feeding unit (101, 201) supplies the carrier substance and/or a supply direction along which the dose feeder (102, 202) supplies the physiologically active ingredient is perpendicular to the processing path and/or is parallel to the force of gravity.

4. The device (100, 200) according to any one of the claims 1 to 3, wherein the feeding unit (101, 201) is a gravimetric powder feeder.

5. The device (100, 200) according to any one of the claims 1 to 4,
wherein the mixer-conveyor unit (103, 203) is an extruder, particularly a screw extruder;
wherein in particular a housing of the extruder has a first inlet at which the feeding unit (101, 201) is arranged for supplying the carrier substance (104, 204) and has a second inlet downstream of the first inlet at which the dose feeder (102, 202, 302) is arranged for discontinuously adding the definable portions of the physiologically active ingredient (312).

6. The device (100, 200) according to any one of the claims 1 to 5,
wherein the device further comprises a further dose feeder (205) configured for discontinuously adding definable portions of a further physiologically active ingredient to the carrier substance (104, 204);
wherein in particular the further dosing feeder (205) comprises:
a further reservoir containing the further physiologically active ingredient;
a further dosing unit comprising a cavity configured for accommodating an amount of the further physiologically active ingredient corresponding to one portion of the definable portions of the further physiologically active ingredient from the reservoir; and
a further discharge element configured for discharging the accommodated amount of the further physiologically active ingredient from the further dosing unit.

7. The device (100, 200) according to claim 6, wherein a time interval with which the portion of the physiologically active ingredient is added to the carrier substance and a further time interval with which the portion of the further physiologically active ingredient is added to the carrier substance are equal.

8. The device (100, 200) according to claim 6 , wherein a time interval with which the portion of the physiologically active ingredient is added to the carrier substance and a further time interval with which the portion of the further physiologically active ingredient is added to the carrier substance are different.

9. A method of providing a continuous flow of a compound having a constant low dose of a physiologically active ingredient (312), the method comprising
supplying a carrier substance (104, 204);
discontinuously adding definable portions of the physiologically active ingredient (312) to the carrier substance (104, 204) by a dose feeder, wherein the dose feeder comprises a dosing unit comprising a cavity, wherein a volume of the cavity (316) of the dosing unit defines the accommodated amount of the physiologically active ingredient (312) corresponding to one portion of the definable portions of the physiologically active ingredient (312);
mixing and conveying the carrier substance (104, 204) and the physiologically active ingredient (312) along a processing path in order to provide the continuous flow of the constant low dose compound at an end of the processing path.

10. The method according to claim 9, comprising at least one of the following features:
adjusting the collected amount of the physiologically active ingredient (312) in accordance with a predefined target value;
adjusting an interval, particularly a temporal interval or a spatial interval, with which the portion of the physiologically active ingredient (312) is discontinuously added to the carrier substance in accordance with a predefined target value;
adding the physiologically active ingredient (312) in periodic intervals to the carrier substance.

11. The method according to any one of the claims 9 to 10,
wherein the method further comprises
discontinuously adding definable portions of a further physiologically active ingredient (312) to the carrier substance (104, 204);
wherein in particular discontinuously adding the definable portions of the further physiologically active ingredient to the carrier substance (104, 204) comprises:
collecting an amount of the further physiologically active ingredient corresponding to one portion of the definable portions of the further physiologically active ingredient from a further reservoir; and
discharging the collected amount of the further physiologically active ingredient to the carrier substance (104, 204).

12. The method according to any one of the claims 9 to 11, wherein the carrier substance (104, 204) and/or the physiologically active ingredient and/or the further physiologically active ingredient are in granular form, particularly powder form.

13. The method according to any of the claims 9 to 12, wherein the physiologically active ingredient (312) is added to the carrier substance (104, 204) in:
at least one aggregate state selected from the group consisting of a solid state, a liquid state, a gaseous state, a suspension state, an emulsion state, and a melt state;
and/or
at least one formulation selected from the group consisting of a powder, capsules, pills, tablets, and emulsions.

14. The method according to any one of the claims 11 to 13, wherein an interval with which the portion of the physiologically active ingredient is added to the carrier substance and a further interval with which the portion of the further physiologically active ingredient is added to the carrier substance (104, 204) are equal.

15. The method according to any one of the claims 11 to 13, wherein an interval with which the portion of the physiologically active ingredient is added to the carrier substance and a further interval with which the portion of the further physiologically active ingredient is added to the carrier substance (104, 204) are different.
